# EUROPÄISCHE PATENTSCHRIFT

(11) **EP 2 149 725 B1**
(45) Veröffentlichungstag und Bekanntmachung des Hinweises auf die Patenterteilung: **23.05.2012**
(21) Anmeldenummer: 09009722.1
(22) Anmeldetag: 28.07.2009
(51) Int. Cl.: F16H 37/04, F16H 3/097

(54) **Getriebeeinheit**
Gear unit
Unité d'engrenage

(30) Priorität: 02.08.2008 DE 102008036165
(43) Veröffentlichungstag der Anmeldung: 03.02.2010
(73) Patentinhaber: Daimler AG, 70327 Stuttgart (DE)
(72) Erfinder: Kayran, Günter, 73760 Ostfildern (DE); Luckmann, Jens, 71364 Winnenden (DE)
(74) Vertreter: JENSEN & SON

(56) Entgegenhaltungen:
- DE-A1-102005 033 027
- DE-A1-102005 044 068
- JP-A- 2 146 336
- JP-A- 61 103 038
- US-A- 5 367 914
- US-A1- 2006 025 272

## Beschreibung

Die Erfindung betrifft eine Getriebeeinheit nach dem Oberbegriff des Anspruchs 1.

Es sind bereits Getriebeeinheiten, insbesondere Kraftfahrzeuggetriebeeinheiten, bekannt, die ein Doppelkupplungsgetriebe mit zumindest zwei zueinander parallel versetzt angeordneten Vorgelegewellen, mit einer Doppelkupplungsgetriebeausgangswelle und mit zumindest zwei Ausgangszahnradebenen, die dazu vorgesehen sind, die Vorgelegewellen und die Doppelkupplungsgetriebeausgangswelle zu verbinden, aufweisen.

DE 10 2005 044068 A1 und DE 10 2005 033027 A1 zeigen jeweils ein lastschaltbares Gruppengetriebe, bei dem zur Aufteilung der Kräfte bei einem geschalteten Gang zwei identische Vorgelegewellen vorgeschlagen werden. Hierbei sind beide Vorgelegewellen dem gleichen Teilgetriebe, also den gleichen Gängen, zugeordnet.

Die US 5 367 914 A zeigt ein Doppelkupplungsgetriebe mit nur einer Eingangswelle und zwei Eingangskonstanten und zwei zueinander parallel versetzten Kupplungen, wobei nur ein Teil der Vorgelegewellen, nämlich zwei Ausgangszahnradebenen, gleich und die übrigen Ausgangszahnradebenen verschieden ausgeführt sind.

JP 02 146336 A offenbart ein Doppelkupplungsgetriebe mit 2 Vorgelegewellen und 9 Vorwärtsgängen, bei dem die geraden Gängen der einen Vorgelegewelle und die ungeraden Gänge de anderen Vorgelegewelle zugeordnet sind, wobei der neunte Gang als Direktgang ausgebildet ist.

Eine gattungsgemäße Getriebeeinheit mit Doppelkupplungsgetriebe und einem nachgeordneten Gruppengetriebe in Planetenbauweise ist aus US 2006/025272 A1 bekannt. Das Doppelkupplungsgetriebe zeichnet sich hierbei durch Ausgangskonstanten und vier Eingangszahnradebenen aus.

JP 61 103038 A zeigt ebenfalls ein Doppelkupplungsgetriebe mit einem nachgeordneten Gruppengetriebe, wobei das Gruppengetriebe durch mehrere Gangstufen realisiert ist. Besonders auffällig ist hier, dass das Doppelkupplungsgetriebe drei Eingangswellen aufweist, wodurch die mit den Vorgelegewellen verbindbaren Eingangswellen als Hohlwellen ausgeführt sind.

Der Erfindung liegt insbesondere die Aufgabe zugrunde, eine Fertigung der Getriebeeinheit zu vereinfachen. Sie wird gemäß der Erfindung durch die Merkmale des Anspruchs 1 gelöst. Weitere Ausgestaltungen ergeben sich aus den Unteransprüchen.

Die Erfindung geht aus von einer Getriebeeinheit nach dem Oberbegriff des Anspruchs 1.

Es wird vorgeschlagen, dass jede der Lastschaltkupplungen mit einer Doppelkupplungsgetriebeeingangswelle verbunden ist, wobei eine Doppelkupplungsgetriebeeingangswelle als Vollwelle ausgeführt ist und die andere als Hohlwelle ausgeführte Doppelkupplungsgetriebeeingangswelle durchsetzt, wobei jeweils eine der Eingangszahnradebenen eine der Doppelkupplungsgetriebeeingangswellen und eine der Vorgelegewellen miteinander verbindet, und die Vorgelegewellen in sämtlichen Ausgangszahnradebenen des Doppelkupplungsgetriebes symmetrisch ausgebildet sind.
Unter einer "symmetrischen Ausbildung in einer Ausgangszahnradebene" soll insbesondere eine symmetrische Ausbildung von Zahnrädern der Zahnradebenen verstanden werden. Unter einer "Ausgangszahnradebene" soll insbesondere eine als Übersetzungsstufe vorgesehene Zahnradebene verstanden werden, die dazu vorgesehen ist, ein Antriebsmoment aus der Vorgelegewelle auszuleiten. Unter "vorgesehen" soll insbesondere speziell ausgestattet und/oder ausgelegt verstanden werden. Da die beiden Vorgelegewellen durch eine symmetrische Ausgestaltung eine hohe Anzahl gleicher Bauteile und gleicher Fertigungsschritte aufweisen, kann dadurch eine einfache Fertigung und Montage der Vorgelegewellen realisiert werden, wodurch auch eine Fertigung der Getriebeeinheit vereinfacht werden kann. Vorteilhafterweise weist die Getriebeeinheit vier symmetrisch ausgebildete Ausgangszahnradebenen auf.

Dadurch, dass die Vorgelegewellen in sämtlichen Ausgangszahnradebenen des Doppelkupplungsgetriebes symmetrisch ausgebildet sind, können eine besonders einfach Fertigung und Montage der Getriebeeinheit erreicht werden. Insbesondere können dadurch die Vorgelegewellen zunächst in einer Fertigungslinie, die dazu vorgesehen ist, die Ausgangszahnradebenen zu montieren, gefertigt werden. Vorzugsweise sind sämtliche symmetrische Ausgangszahnradebenen dazu vorgesehen, benachbarte Getriebegänge zu bilden.

Dadurch, dass das Doppelkupplungsgetriebe zwei Eingangszahnradebenen mit unterschiedlichen Übersetzungsverhältnissen aufweist, können einfach unterschiedliche Übersetzungen für die mittels einer Ausgangszahnradebene bildbaren Doppelkupplungsgetriebevorwärtsgänge realisiert werden. Vorzugsweise unterscheiden sich die Vorgelegewellen lediglich in einer Ausgestaltung der Eingangszahnradebenen, wodurch eine Unterscheidung der Vorgelegewellen erst in einer Montage von Zahnrädern für die Eingangszahnradebenen nötig ist.

Dadurch, dass die Getriebeeinheit ein Gruppengetriebe aufweist, das dazu vorgesehen ist, eine untere Schaltgruppe und eine obere Schaltgruppe bereitzustellen, kann einfach eine Anzahl von schaltbaren Getriebegängen erhöht werden.

Weiter wird vorgeschlagen, dass wenigstens eine der Ausgangszahnradebenen dazu vorgesehen ist, zumindest zwei benachbarte Doppelkupplungsgetriebevorwärtsgänge zu bilden. Dadurch kann eine konstruktiv einfache Ausgestaltung erreicht werden. Unter einem "Doppelkupplungsgetriebevorwärtsgang" soll insbesondere ein mittels des Doppelkupplungsgetriebes bildbarer Vorwärtsgetriebegang verstanden werden.

Ferner wird vorgeschlagen, dass die Vorgelegewellen äquidistant zu der Doppelkupplungsgetriebeausgangswelle angeordnet sind. Dadurch können einfach symmetrische Ausgangszahnradebenen realisiert werden.

Weiter wird vorgeschlagen, dass das Doppelkupplungsgetriebe zumindest zwei Schalteinheiten aufweist, die symmetrisch auf den Vorgelegewellen angeordnet sind. Dadurch können die Fertigung und die Montage weiter vereinfacht werden.

Weiter wird vorgeschlagen, dass die Getriebeeinheit eine Zusatzwelle aufweist, die zur Bildung eines Rückwärtsgetriebegangs und eines Nebenabtriebs vorgesehen ist. Dadurch kann eine einfache und kompakte Ausgestaltung für einen Nebenabtrieb und eine Drehrichtungsumkehr zur Bildung des Rückwärtsgetriebegangs geschaffen werden.

In einer weiteren Ausgestaltung wird vorgeschlagen, dass die Getriebeeinheit ein in einer Eingangszahnradebene angeordnetes Umkehrrad aufweist, das für eine Drehrichtungsumkehr zur Bildung eines Rückwärtsgetriebegangs vorgesehen ist. Dadurch kann ein Bauraumbedarf für eine Zusatzwelle eingespart werden.

Vorteilhafterweise weist die Getriebeeinheit weiter eine Schalteinheit auf, die in einer ersten Schaltstellung zur Kopplung mit einer ersten und einer zweiten Ankoppeleinheit und in einer zweiten Schaltstellung zur Kopplung mit der ersten Ankoppeleinheit vorgesehen ist. Dadurch kann einfach eine vorteilhafte Schaltlogik bereitgestellt werden. Insbesondere ist es vorteilhaft, wenn die Schalteinheit dazu vorgesehen ist, den Rückwärtsgetriebegang und einen Vorwärtsgetriebegang zu bilden, da durch eine derartige Ausgestaltung gleichzeitig entweder der Rückwärtsgetriebegang und der Vorwärtsgetriebegang oder nur der Vorwärtsgetriebegang gebildet werden können. Grundsätzlich kann eine derartige Schalteinheit aber auch für andere Anwendungen vorgesehen sein und insbesondere auch unabhängig von der Getriebeeinheit verwendet werden.

Insbesondere ist es dabei vorteilhaft, wenn die Schalteinheit zumindest eine Schaltklaueneinheit aufweist, die dazu vorgesehen ist, in zumindest zwei axial beabstandete Eingriffseinheiten einer Ankoppeleinheit einzugreifen. Dadurch kann einfach eine beschriebene Schalteinheit realisiert werden. Insbesondere ist es dabei vorteilhaft, wenn die Schaltklaueneinheit dazu vorgesehen ist, wahlweise in eine der Eingriffseinheiten der Ankoppeleinheit einzugreifen. Vorzugsweise ist ein axialer Abstand der Eingriffseinheiten größer als eine axiale Breite der Schaltklaueneinheit, wodurch einfach eine entkoppelte Neutralstellung und zwei Schalstellungen, in der die Schalteinheit mit der Ankoppeleinheit gekoppelt ist, realisiert werden können.

Weiter wird eine Ausgestaltung mit einer Schalteinheit, die für einen Wechsel zwischen den Schaltgruppen unter Last vorgesehen ist, vorgeschlagen. Dadurch kann die Schaltgruppe besonders komfortabel gewechselt werden. Insbesondere ist dadurch eine volllastschaltbare Getriebeeinheit realisierbar.

In einer besonders vorteilhaften Ausgestaltung weist die Getriebeeinheit ein Doppelkupplungsgetriebeelement und ein Gruppengetriebeelement auf, die mittels der Schalteinheit miteinander verbindbar sind. Dadurch kann die Lastschaltbarkeit für den Wechsel der Schaltgruppe besonders einfach realisiert werden.

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine erfindungsgemäße Getriebeeinheit,
- Fig. 2: eine zweite erfindungsgemäße Getriebeeinheit,
- Fig. 3: eine Schalteinheit der Getriebeeinheit aus Figur 2 in einer Neutralstellung,
- Fig. 4: die Schalteinheit in einer ersten Schaltstellung,
- Fig. 5: die Schalteinheit in einer zweiten Schaltstellung,
- Fig. 6: die Schalteinheit in einer weiteren Darstellungsebene,
- Fig. 7: eine Schiebemuffe der Schalteinheit in einer Querschnittsdarstellung,
- Fig. 8: eine Querschnittsdarstellung der Schalteinheit,
- Fig. 9: eine weitere Querschnittsdarstellung der Schalteinheit in einer parallel ver- setzen Schnittebene und
- Fig. 10: eine dritte erfindungsgemäße Getriebeeinheit.

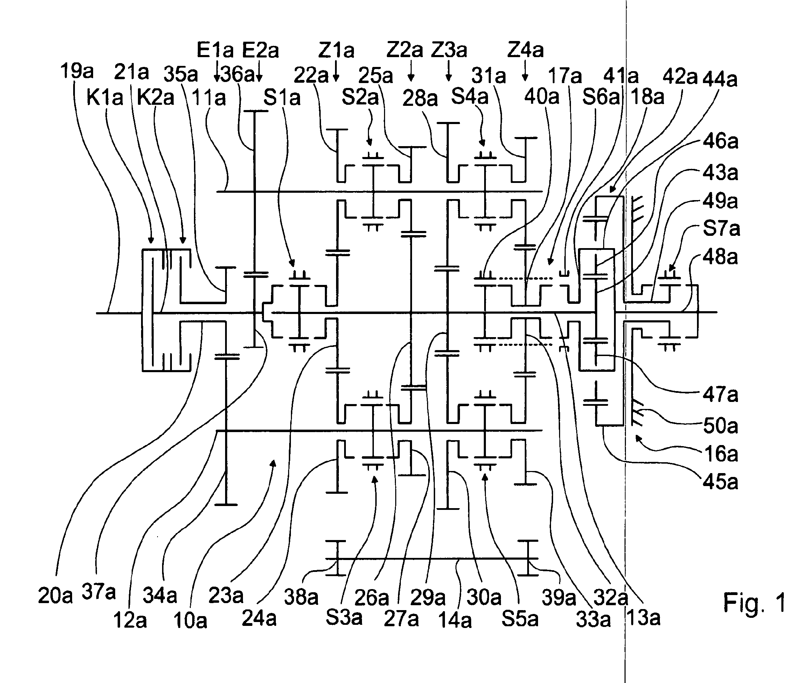

Figur 1 zeigt eine Getriebeeinheit, die als eine Kraftfahrzeuggetriebeeinheit für ein Nutzfahrzeug ausgebildet ist. Die Getriebeeinheit ist dazu vorgesehen, siebzehn unterschiedlich übersetze Vorwärtsgetriebegänge V1_{L}a-V9_{L}a, V1_{H}a-V9_{H}a zu schalten. Weiter ist die Getriebeeinheit dazu vorgesehen, einen Rückwärtsgetriebegang R1a zu schalten. Zum Schalten der Vorwärtsgetriebegänge V1_{L}a-V9_{L}a, V1_{H}a-V9_{H}a weist die Getriebeeinheit ein Doppelkupplungsgetriebe 10a und ein Gruppengetriebe 16a auf. Sämtliche Vorwärtsgetriebegänge V1_{L}a-V9_{L}a, V1_{H}a-V9_{H}a sind untereinander lastschaltbar.

Das Doppelkupplungsgetriebe 10a ist dazu vorgesehen, neun Doppelkupplungsgetriebevorwärtsgänge V1a-V9a zu schalten. Das Gruppengetriebe 16a ist dazu vorgesehen, eine untere Schaltgruppe und eine obere Schaltgruppe zu schalten. Mittels der Schaltgruppen wird jeder Doppelkupplungsgetriebevorwärtsgang V1a-V9a des Doppelkupplungsgetriebes 10a doppelt genutzt.

Die unteren acht Vorwärtsgetriebegänge V1_{L}a-V8_{L}a sind der ersten Schaltgruppe zugeordnet. Zum Schalten der unteren acht Vorwärtsgetriebegänge V1_{L}a-V8_{L}a wird mittels des Gruppengetriebes 16a eine hohe Übersetzung eingestellt, die auf die Doppelkupplungsgetriebevorwärtsgänge V1a-V8a wirkt, die mittels des Doppelkupplungsgetriebes 10a gebildet werden können.

Die oberen acht Vorwärtsgetriebegänge V2_{H}a-V9_{H}a sind der oberen Schaltgruppe zugeordnet. Zum Schalten der oberen acht Vorwärtsgetriebegänge V2_{H}a-V9_{H}a wird mittels des Gruppengetriebes 16a eine niedrige Übersetzung eingestellt, die auf die Doppelkupplungsgetriebevorwärtsgänge V2a-V9a wirkt. Die Vorwärtsgetriebegänge V1_{L}a-V8_{L}a der unteren Schaltgruppe weisen eine höhere Übersetzung auf als die Vorwärtsgetriebegänge V2_{H}a-V9_{H}a der oberen Schaltgruppe.

Der letzte Vorwärtsgetriebegang V9_{L}a der unteren Schaltgruppe und der erste Vorwärtsgetriebegang V1_{H}a der oberen Schaltgruppe weisen ein gleiches Gesamtübersetzungsverhältnis auf. Mittels der achtzehn bildbaren Vorwärtsgetriebegänge V1_{L}a-V9_{L}a, V1_{H}a-V9_{H}a der Getriebeeinheit sind somit siebzehn unterschiedlich übersetze Vorwärtsgetriebegänge schaltbar.

Aufgrund des gleichen Gesamtübersetzungsverhältnisses für die Vorwärtsgetriebegänge V9_{L}a, V1_{H}a sind der letzte Vorwärtsgetriebegang V9_{L}a der unteren Schaltgruppe und der erste Vorwärtsgetriebegang V1_{H}a der oberen Schaltgruppe gleichzeitig schaltbar. Mittels der beiden gleich übersetzten Vorwärtsgetriebegänge V9_{L}a, V1_{H}a kann unter Last zwischen den beiden Schaltgruppen gewechselt werden. Die Vorwärtsgetriebegänge V1_{L}a-V9_{L}a, V1_{H}a-V9_{H}a einer Schaltgruppe sind mittels des Doppelkupplungsgetriebes 10a untereinander lastschaltbar.

Die Getriebeeinheit weist eine Getriebeeingangswelle 19a auf, die dazu vorgesehen ist, mit einer nicht näher dargestellten Antriebsmaschine verbunden zu werden. An die Getriebeeingangswelle 19a schließen zwei in einem Kraftfluss parallel angeordnete Lastschaltkupplungen K1a, K2a des Doppelkupplungsgetriebes 10a an, die für eine Einleitung eines Antriebsmoments in das Doppelkupplungsgetriebe 10a vorgesehen sind. Die Lastschaltkupplungen K1a, K2a sind koaxial angeordnet.

Jede der Lastschaltkupplungen K1a, K2a ist mit einer Doppelkupplungsgetriebeeingangswelle 20a, 21 a verbunden. Die Doppelkupplungsgetriebeeingangswellen 20a, 21 a sind im Kraftfluss nach den Laschaltkupplungen K1a, K2a angeordnet. Die erste Doppelkupplungsgetriebeeingangswelle 20a, die mit der Lastschaltkupplung K2a verbunden ist, ist als eine Hohlwelle ausgeführt. Die Doppelkupplungsgetriebeeingangswelle 20a wird von der Doppelkupplungsgetriebeeingangswelle 21 a durchsetzt. Die Doppelkupplungsgetriebeeingangswelle 21 a ist mit der Lastschaltkupplung K1a verbunden.

Koaxial zu den Doppelkupplungsgetriebeeingangswellen 20a, 21 a ist eine Doppelkupplungsgetriebeausgangswelle 13a angeordnet. Mittels der Doppelkupplungsgetriebeausgangswelle 13a kann ein Antriebsmoment aus dem Doppelkupplungsgetriebe 10a ausgeleitet und an das Gruppengetriebe 16a übertragen werden.

Das Doppelkupplungsgetriebe 10a weist zwei Vorgelegewellen 11a, 12a auf. Die Vorgelegewellen 11 a, 12a sind parallel versetzt zu den Doppelkupplungsgetriebeeingangswellen 20a, 21 a bzw. der Doppelkupplungsgetriebeausgangswelle 13a angeordnet. Ferner sind die Vorgelegewellen 11a, 12a zueinander parallel versetzt angeordnet. Die Vorgelegewellen 11 a, 12a sind in einem gleichen Abstand zu der Doppelkupplungsgetriebeausgangswelle 13a, d.h. äquidistant zu der Doppelkupplungsgetriebeausgangswelle 13a angeordnet. In einer Querschnittsebene senkrecht zu einer Haupterstreckungsrichtung der Getriebeeinheit sind die Doppelkupplungsgetriebeeingangswellen 20a, 21 a und die Doppelkupplungsgetriebeausgangswelle 13a auf einem ersten Eckpunkt einer Raute angeordnet. Die Vorgelegewellen 11 a, 12a sind auf benachbarten Eckpunkten der Raute angeordnet.

Weiter weist das Doppelkupplungsgetriebe eine Zusatzwelle 14a auf, die zur Bildung des Rückwärtsgetriebegangs R1a vorgesehen ist. Die Zusatzwelle 14a ist parallel zu den Vorgelegewellen 11a, 12a angeordnet. In der Raute der Querschnittsebene senkrecht zu der Haupterstreckungsrichtung der Getriebeeinheit ist die Zusatzwelle 14a auf einem vierten, dem ersten Eckpunkt gegenüberliegenden Eckpunkt angeordnet. Mittels der Zusatzwelle 14a ist ein Nebenabtrieb realisierbar.

Das Doppelkupplungsgetriebe 10a weist zwei Eingangszahnradebenen E1a, E2a und vier Ausgangzahnradebenen Z1 a, Z2a, Z3a, Z4a auf. Eingangsseitig sind zunächst die beiden Eingangszahnradebenen E1a, E2a angeordnet. Sie sind als Eingangskonstanten ausgebildet. Mittels der Eingangszahnradebenen E1a, E2a sind die Doppelkupplungsgetriebeeingangswellen 20a, 21 a und die Vorgelegenwellen 11a, 12a miteinander verbunden. Dabei verbindet jeweils eine der Eingangszahnradebenen E1a, E2a eine der Doppelkupplungsgetriebeeingangswellen 20a, 21a und eine der Vorgelegewellen 11a, 12a miteinander. Die Ausgangszahnradebenen Z1 a, Z2a, Z3a, Z4a sind als Übersetzungsstufen ausgebildet. Mittels der Ausgangzahnradebenen Z1 a, Z2a, Z3a, Z4a sind die Vorgelegewellen 11a, 12a mit der Doppelkupplungsgetriebeausgangswelle 13a verbunden.

Zur Bildung der Vorwärtsgetriebegänge V1_{L}a-V9_{L}a, V1_{H}a-V9_{H}a sind in den Ausgangszahnradebenen Z1a, Z2a, Z3a, Z4a jeweils drei Zahnräder 22a-24a, 25a-27a, 28a-30a, 31 a-33a angeordnet.

In jeder der Ausgangszahnradebenen Z1a, Z2a, Z3a, Z4a ist eines der Zahnräder 23a, 26a, 29a, 32a auf der Doppelkupplungsgetriebeausgangswelle 13a angeordnet. Die auf der Doppelkupplungsgetriebeausgangswelle 13a angeordneten Zahnräder 23a, 26a, 29a, 32a kämmen jeweils mit den beiden korrespondierenden Zahnrädern 22a, 24a, 25a, 27a, 28a, 30a, 31 a, 33a der entsprechenden Ausgangzahnradebenen Z1a, Z2a, Z3a, Z4a. Die korrespondierenden Zahnräder 22a, 25a, 28a, 31a sind auf der Vorgelegewelle 11a angeordnet. Die korrespondierenden Zahnräder 24a, 27a, 30a, 33a sind auf der Vorgelegewelle 12a angeordnet.

Die Eingangszahnradebene E1a verbindet die äußere Doppelkupplungsgetriebeeingangswelle 20a mit der Vorgelegewelle 12a. Die Eingangszahnradebene E1a ist zur Bildung der geraden Doppelkupplungsgetriebevorwärtsgänge V2a, V4a, V6a, V8a vorgesehen. Die geraden Doppelkupplungsgetriebevorwärtsgänge V2a, V4a, V6a, V8a werden mittels der zweiten Vorgelegewelle 12a gebildet. Die Eingangszahnradebene E2a ist zur Bildung der ungeraden Doppelkupplungsgetriebevorwärtsgänge V1a, V3a, V5a, V7a vorgesehen. Die ungeraden Doppelkupplungsgetriebevorwärtsgänge V1a, V3a, V5a, V7a werden mittels der ersten Vorgelegewelle 11a gebildet. Der Doppelkupplungsgetriebevorwärtsgang V9a ist als ein Direktgang ausgeführt.

Die Eingangszahnradebene E2a weist ein größeres Übersetzungsverhältnis auf als die Eingangszahnradebene E1a. Die Übersetzungsverhältnisse sind mittels in den Eingangszahnradebenen E1a, E2a angeordneten Zahnrädern 34a, 35a, 36a, 37a realisiert, die alle einen unterschiedlichen Durchmesser aufweisen. Jeweils zwei der Zahnräder 34a, 35a, 36a, 37a sind in einer Eingangszahnradebene E1a, E2a angeordnet. Durch die unterschiedlichen Durchmesser der Zahnräder 34a, 35a, 36a, 37a weisen die Eingangszahnradstufen E1a, E2a unterschiedliche Übersetzungsverhältnisse auf.

Die Ausgangszahnradebenen Z1 a, Z2a, Z3a, Z4a sind jeweils zur Bildung benachbarter Doppelkupplungsgetriebevorwärtsgänge V1a-V8a vorgesehen. Die Ausgangszahnradebene Z1a ist zur Bildung der Doppelkupplungsgetriebevorwärtsgänge V5a, V6a vorgesehen. Die Ausgangszahnradebene Z2a ist zur Bildung der Doppelkupplungsgetriebevorwärtsgänge V3a, V4a vorgesehen. Die Ausgangszahnradebene Z3a ist zur Bildung der Doppelkupplungsgetriebevorwärtsgänge V7a, V8a vorgesehen. Die Ausgangszahnradebene Z4a ist zur Bildung der Doppelkupplungsgetriebevorwärtsgänge V1a, V2a vorgesehen. Außerdem ist die Ausgangszahnradebene Z1a zur Bildung des Rückwärtsgetriebegangs R1 a vorgesehen.

Die Vorgelegewellen 11a, 12a sind in sämtlichen Ausgangzahnradebenen Z1a, Z2a, Z3a, Z4a symmetrisch ausgebildet. Die Vorgelegewellen 11a, 12a sind dabei in Bezug auf einen Durchmesser der auf den Vorgelegewellen 11a, 12a angeordneten Zahnrädern 22a, 24a, 25a, 27a, 28a, 30a, 31 a, 33a, in Bezug auf eine Anordnung der Zahnräder 22a, 24a, 25a, 27a, 28a, 30a, 31 a, 33a in den Ausgangszahnradebenen Z1a, Z2a, Z3a, Z4a und in Bezug auf eine Ausführung der Zahnräder 22a, 24a, 25a, 27a, 28a, 30a, 31 a, 33a als Losräder bzw. als Festräder symmetrisch ausgebildet.

Durch die symmetrische Ausbildung der Ausgangszahnradebenen Z1a, Z2a, Z3a, Z4a weist jede der Ausgangszahnradebenen Z1a, Z2a, Z3a, Z4a lediglich ein Übersetzungsverhältnis auf. Unterschiedliche Übersetzungsverhältnisse zur Bildung der Doppelkupplungsgetriebevorwärtsgänge V1 a-V9a, die mittels einer der Ausgangszahnradebenen Z1a, Z2a, Z3a, Z4a gebildet werden, werden mittels der Eingangszahnradebenen E1a, E2a bereitgestellt.

In den Ausgangszahnradebenen Z1a, Z2a, Z3a, Z4a ist jeweils ein Zahnrad 22a, 25a, 28a, 31 a auf der Vorgelegewelle 11a, ein Zahnrad 24a, 27a, 30a, 33a auf der Vorgelegewelle 12a und ein Zahnrad 23a, 26a 29a, 32a auf der Doppelkupplungsgetriebeausgangswelle 13a angeordnet. Die auf den Vorgelegewellen 11 a, 12a angeordneten Zahnräder 22a, 24a, 25a, 27a, 28a, 30a, 31 a, 33a kämmen dabei jeweils mit dem auf der Doppelkupplungsgetriebeausgangswelle 13a angeordneten Zahnrad 23a, 26a, 29a, 32a der gleichen Ausgangszahnradebene Z1a, Z2a, Z3a, Z4a.

Die jeweils zwei Zahnräder 22a, 24a, 25a, 27a, 28a, 30a, 31a, 33a einer der Ausgangszahnradebenen Z1a, Z2a, Z3a, Z4a weisen einen gleichen Durchmesser auf. Dabei sind sämtliche Zahnräder 22a, 24a, 25a, 27a, 28a, 30a, 31a, 33a, die auf den Vorgelegewellen 11a, 12a in den Ausgangszahnradebenen Z1a, Z2a, Z3a, Z4a angeordnet sind, als Losräder ausgebildet. Die auf der Doppelkupplungsgetriebeausgangswelle 13a angeordneten Zahnräder 23a, 26a, 29a, 32a sind teilweise als Losräder und teilweise als Festräder ausgebildet.

Die Zusatzwelle 14a weist zwei Zahnräder 38a, 39a auf, die als Festräder ausgebildet sind. Die Zahnräder 38a, 39a sind in der Ausgangszahnradebene Z1 a und der Ausgangzahnradebene Z4a angeordnet. Das Zahnrad 38a kämmt mit dem Zahnrad 23a auf der Doppelkupplungsgetriebeausgangswelle 13a. Das Zahnrad 39a kämmt mit dem Zahnrad 33a auf der Vorgelegewelle 12a. Mittels der Zusatzwelle 14a wird eine Drehrichtungsumkehr zur Bildung des Rückwärtsgetriebegangs R1 a bereitgestellt.

Die Getriebeeinheit weist sieben Schalteinheiten S1a-S7a auf. Die Schalteinheiten S1aS7a sind in vier Schaltebenen angeordnet. Die Schalteinheiten S1a-S7a sind als Schaltschiebemuffen ausgeführt. Die fünf Schalteinheiten S1a, S2a, S3a, S4a, S5a sind für das Doppelkupplungsgetriebe 10a vorgesehen. Sie sind dazu vorgesehen, die als Losräder ausgeführten Zahnräder 22a, 23a, 24a, 25a, 27a, 28a, 30a, 31a, 32a, 33a drehfest mit den Vorgelegewellen 11a, 12a bzw. der Doppelkupplungsgetriebeausgangswelle 13a zu verbinden. Die Schalteinheit S6a ist in einer ersten Schaltstellung für das Doppelkupplungsgetriebe 10a vorgesehen. In einer zweiten Schaltstellung ist sie für eine Anbindung des Doppelkupplungsgetriebes 10a an das Gruppengetriebe 16a vorgesehen. Die Schalteinheit S7a ist für das Gruppengetriebe 16a vorgesehen.

Die Schalteinheit S1a ist in der ersten Schaltebene zwischen der Eingangszahnradebene E2a und der Ausgangszahnradebene Z1a angeordnet. Sie ist auf der Doppelkupplungsgetriebeausgangswelle 13a des Doppelkupplungsgetriebes 10a angeordnet. In einer ersten Schaltstellung verbindet sie die innere Doppelkupplungsgetriebeeingangswelle 21a und die Doppelkupplungsgetriebeausgangswelle 13a drehfest miteinander. In einer zweiten Schaltstellung verbindet sie das als Losrad ausgeführte Zahnrad 23a der Ausgangszahnradebene Z1 a drehfest mit der Doppelkupplungsgetriebeausgangswelle 13a.

Die Schalteinheiten S2a, S3a sind in der zweiten Schaltebene zwischen der Ausgangszahnradebene Z1 a und der Ausgangszahnradebene Z2a angeordnet. Die Schalteinheit S2a ist auf der ersten Vorgelegewelle 11a angeordnet. In einer ersten Schaltstellung verbindet sie das als Losrad ausgebildete Zahnrad 22a mit der Vorgelegewelle 11a. In einer zweiten Schaltstellung verbindet sie das als Losrad ausgebildete Zahnrad 25a mit der Vorgelegewelle 11a. Die Schalteinheit S3a ist auf der zweiten Vorgelegewelle 12a angeordnet. Sie verbindet in einer ersten Schaltstellung das Zahnrad 24a mit der Vorgelegewelle 12a und in einer zweiten Schaltstellung das Zahnrad 27a mit der Vorgelegewelle 12a.
Die Schalteinheiten S4a, S5a sind in der dritten Schaltebene zwischen der Ausgangszahnradebene Z3a und der Ausgangszahnradebene Z4a angeordnet. Die Schalteinheit S4a ist auf der ersten Vorgelegewelle 11a angeordnet. In einer ersten Schaltstellung verbindet sie das als Losrad ausgebildete Zahnrad 28a mit der Vorgelegewelle 11a. In einer zweiten Schaltstellung verbindet sie das als Losrad ausgebildete Zahnrad 31a mit der Vorgelegewelle 11a. Die Schalteinheit S5a ist auf der zweiten Vorgelegewelle 12a angeordnet. Sie verbindet in einer ersten Schaltstellung das Zahnrad 30a mit der Vorgelegewelle 12a und in einer zweiten Schaltstellung das Zahnrad 33a mit der Vorgelegewelle 12a.

Die Schalteinheit S6a ist in der vierten Schaltebene auf der Doppelkupplungsgetriebeausgangswelle 13a angeordnet. In einer ersten Schaltstellung verbindet sie ein Doppelkupplungsgetriebeelement 17a mit einem Gruppengetriebeelement 18a. Das Doppelkupplungsgetriebeelement 17a ist mit dem Zahnrad 32a verbunden, wodurch das Zahnrad 32a mit dem Gruppengetriebeelement 18a verbunden wird. In einer zweiten Schaltstellung verbindet die Schalteinheit S6a das Zahnrad 32a mit der Doppelkupplungsgetriebeausgangswelle 13a.

Die Schalteinheit S6a weist zwei Koppelelemente 40a, 41a auf, mittels denen das Zahnrad 32a wahlweise mit dem Gruppengetriebeelement 18a oder mit der Doppelkupplungsgetriebeausgangswelle 13a verbunden werden kann. Die Schalteinheit S6a ist als eine geteilte Schaltschiebemuffe ausgeführt, wobei die Koppelelemente 40a, 41a die geteilte Schaltschiebemuffe bilden. Das erste Koppelelement 40a ist für die erste Schaltstellung vorgesehen. Das zweite Koppelelement 41a ist für die zweite Schaltstellung vorgesehen.

Das Zahnrad 32a ist zumindest teilweise axial zwischen den Koppelelementen 40a, 41a angeordnet. Die Koppelelemente 40a, 41a sind bewegungstechnisch miteinander verbunden. Um die Koppelelemente 40a, 41a miteinander zu verbinden, weist das Zahnrad 32a Aussparungen auf, durch die hindurch die Koppelelemente 40a, 41a miteinander verbunden sind.

Die Schalteinheit S7a ist ausgangsseitig von dem Gruppengetriebe 16a angeordnet. Mittels der Schalteinheit S7a wird ein Übersetzungsverhältnis des Gruppengetriebes 16a eingestellt.

Zur Bildung des ersten Doppelkupplungsgetriebevorwärtsgangs V1 a wird die Schalteinheit S4a in die zweite Schaltstellung geschaltet und das Zahnrad 31a wird drehfest mit der Vorgelegewelle 11a verbunden. Ein Kraftfluss für den ersten Doppelkupplungsgetriebevorwärtsgang V1a geht über die erste Lastschaltkupplung K1 a, die Eingangszahnradebene E2a und die Ausgangszahnradebene Z4a. Das Zahnrad 32a der Ausgangszahnradebene Z4a wird mittels der Schalteinheit S6a wahlweise mit der Doppelkupplungsgetriebeausgangswelle 13a oder dem Gruppengetriebeelement 18a verbunden.

Zur Bildung des zweiten Doppelkupplungsgetriebevorwärtsgangs V2a wird die Schalteinheit S5a in die zweite Schaltstellung geschaltet und das Zahnrad 33a wird drehfest mit der Vorgelegewelle 12a verbunden. Weiter wird die Schalteinheit S6a in die zweite Schaltstellung geschaltet und das Zahnrad 32a wird drehfest mit der Doppelkupplungsgetriebeausgangswelle 13a verbunden. Ein Kraftfluss für den zweiten Doppelkupplungsgetriebevorwärtsgang V2a geht über die zweite Lastschaltkupplung K2a, die Eingangszahnradebene E1a und die Ausgangszahnradebene Z4a.

Zur Bildung des dritten Doppelkupplungsgetriebevorwärtsgangs V3a wird die Schalteinheit S2a in die zweite Schaltstellung geschaltet und das Zahnrad 25a wird drehfest mit der Vorgelegewelle 11 a verbunden. Ein Kraftfluss für den dritten Doppelkupplungsgetriebevorwärtsgang V3a geht über die erste Lastschaltkupplung K1a, die Eingangszahnradebene E2a und die Ausgangszahnradebene Z2a.

Zur Bildung des vierten Doppelkupplungsgetriebevorwärtsgangs V4a wird die Schalteinheit S3a in die zweite Schaltstellung geschaltet und das Zahnrad 27a wird drehfest mit der Vorgelegewelle 12a verbunden. Ein Kraftfluss für den vierten Doppelkupplungsgetriebevorwärtsgang V4a geht über die zweite Lastschaltkupplung K2a, die Eingangszahnradebene E1a und die Ausgangszahnradebene Z2a.

Zur Bildung des fünften Doppelkupplungsgetriebevorwärtsgangs V5a wird die Schalteinheit S2a in die erste Schaltstellung geschaltet und das Zahnrad 22a wird drehfest mit der Vorgelegewelle 11 a verbunden. Außerdem wird die Schalteinheit S1a in die zweite Schaltstellung geschaltet und das Zahnrad 23a drehfest mit der Doppelkupplungsgetriebeausgangswelle 13a verbunden. Ein Kraftfluss für den fünften Doppelkupplungsgetriebevorwärtsgang V5a geht über die erste Lastschaltkupplung K1a, die Eingangszahnradebene E2a und die Ausgangszahnradebene Z1a.

Zur Bildung des sechsten Doppelkupplungsgetriebevorwärtsgangs V6a wird die Schalteinheit S3a in die erste Schaltstellung geschaltet und das Zahnrad 24a wird drehfest mit der Vorgelegewelle 12a verbunden. Außerdem wird die Schalteinheit S1a in die zweite Schaltstellung geschaltet und das Zahnrad 23a drehfest mit der Doppelkupplungsgetriebeausgangswelle 13a verbunden. Ein Kraftfluss für den sechsten Doppelkupplungsgetriebevorwärtsgang V6a geht über die zweite Lastschaltkupplung K2a, die Eingangszahnradebene E1a und die Ausgangszahnradebene Z1a.

Zur Bildung des siebten Doppelkupplungsgetriebevorwärtsgangs V7a wird die Schalteinheit S4a in die erste Schaltstellung geschaltet und das Zahnrad 28a wird drehfest mit der Vorgelegewelle 11 a verbunden. Ein Kraftfluss für den siebten Doppelkupplungsgetriebevorwärtsgang V7a geht über die erste Lastschaltkupplung K1a, die Eingangszahnradebene E2a und die Ausgangszahnradebene Z3a.

Zur Bildung des achten Doppelkupplungsgetriebevorwärtsgangs V8a wird die Schalteinheit S5a in die erste Schaltstellung geschaltet und das Zahnrad 30a wird drehfest mit der Vorgelegewelle 12a verbunden. Ein Kraftfluss für den achten Doppelkupplungsgetriebevorwärtsgang V8a geht über die zweite Lastschaltkupplung K2a, die Eingangszahnradebene E1a und die Ausgangszahnradebene Z3a.

Zur Bildung des neunten Doppelkupplungsgetriebevorwärtsgangs V9a wird die Schalteinheit S1a in die erste Schaltstellung geschaltet und die innere Doppelkupplungsgetriebeeingangswelle 21a drehfest mit der Doppelkupplungsgetriebeausgangswelle 13a verbunden. Ein Kraftfluss für den neunten Doppelkupplungsgetriebevorwärtsgang V9a geht über die erste Lastschaltkupplung K1a.

Zur Bildung des Rückwärtsgetriebegangs R1 a wird die Schalteinheit S5a in die zweite Schalstellung geschaltet und das Zahnrad 33a mit der Vorgelegewelle 12a verbunden. Weiter wird die Schalteinheit S1a in die zweite Schaltstellung geschaltet und das Zahnrad 23a mit der Doppelkupplungsgetriebeausgangswelle 13a verbunden. Ein Kraftfluss für den Rückwärtsgetriebegang R1a geht über die zweite Lastschaltkupplung K2a, die Eingangszahnradebene E1a, die Ausgangzahnradebene Z4a zur Kopplung mit der Zusatzwelle 14a und die Ausgangszahnradebene Z1a.

Das Gruppengetriebe 16a weist einen Planetenradsatz 42a auf, mittels dem zwei unterschiedliche Übersetzungsverhältnisse bereitgestellt werden können. Der Planetenradsatz 42a ist als ein Stirnradplanetenradsatz ausgeführt. Der Planetenradsatz 42a weist ein Sonnenrad 43a, einen Planetenradträger 44a und ein Hohlrad 45a auf. Der Planetenradträger 44a führt Planetenräder 46a, 47a auf einer Kreisbahn. Die Planetenräder 46a, 47a kämmen jeweils mit dem Sonnenrad 43a und dem Hohlrad 45a.

Das Sonnenrad 43a ist drehfest mit der Doppelkupplungsgetriebeausgangswelle 13a des Doppelkupplungsgetriebes 10a verbunden. Der Planetenradträger 44a ist drehfest mit einer Getriebeausgangswelle 48a verbunden. Außerdem ist der Planetenradträger 44a drehfest mit dem Gruppengetriebeelement 18a verbunden. Der Planetenradträger 44a ist mittels der Schalteinheit S6a drehfest mit dem Doppelkupplungsgetriebeelement 17a verbindbar, das mit dem Zahnrad 32a der Ausgangszahnradebene Z4a verbunden ist. Das Hohlrad 45a ist drehfest mit einer Zwischenwelle 49a verbunden.

Die Schalteinheit S7a ist auf der Zwischenwelle 49a angeordnet. In einer ersten Schaltstellung verbindet sie das Hohlrad 45a mit einem Getriebegehäuse 50a, wodurch das Hohlrad drehfest angeordnet werden kann. In einer zweiten Schaltstellung verbindet sie das Hohlrad 45a mit dem Planetenradträger 44a.

Zur Bildung der unteren Schaltgruppe wird die Schalteinheit S7a in die erste Schaltstellung geschaltet und das Hohlrad 45a drehfest mit dem Getriebegehäuse 50a verbunden. Durch einen Antrieb des Sonnenrads 43a mittels der Doppelkupplungsgetriebeausgangswelle 13a werden die Planetenräder 46a, 47a angetrieben und laufen in dem fest angeordneten Hohlrad 45a um, wodurch der Planetenradträger 44a und damit die Getriebeausgangswelle 48a angetrieben werden. Der Planetenradsatz 42a stellt dabei ein Übersetzungsverhältnis größer als eins bereit.

Zur Bildung der oberen Schaltgruppe wird die Schalteinheit S7a in die zweite Schaltstellung geschaltet und das Hohlrad 45a drehfest mit dem Planetenradträger 44a verbunden. Dadurch wird der Planetenradsatz 42a verblockt und weist ein Übersetzungsverhältnis von eins auf.

Mit Ausnahme des Übergangs zwischen den Schaltgruppen sind die Vorwärtsgetriebegänge V1_{L}a-V9_{L}a, V1_{H}a-V9_{H}a wechselweise den beiden Lastschaltkupplungen K1a, K2a zugeordnet. Bei einem Schaltvorgang von einem der Vorwärtsgetriebegänge V1_{L}a-V9_{L}a, V1_{H}a-V9_{H}a in einen benachbarten Vorwärtsgetriebegang V1_{L}a-V9_{L}a, V1_{H}a-V9_{H}a wird der zu schaltende Vorwärtsgetriebegang V1_{L}a-V9_{L}a, V1_{H}a-V9_{H}a gebildet, während die dem bereits geschalteten Vorwärtsgetriebegang V1_{L}a-V9_{L}a, V1_{H}a-V9_{H}a zugeordnete Lastschaltkupplung K1a, K2a geschlossen bleibt. Anschließend wird von dem bereits geschalteten Vorwärtsgetriebegang Vl_{L}a-V9_{L}a, V1_{H}a-V9_{H}a in den zu schaltenden, benachbarten Vorwärtsgetriebegang V1_{L}a-V9_{L}a, V1_{H}a-V9_{H}a gewechselt, indem die Lastschaltkupplung K1a bzw. K2a, die dem zu schaltenden Vorwärtsgetriebegang V1_{L}a-V9_{L}a, V1_{H}a-V9_{H}a zugeordnet ist, sukzessive geschlossen wird, während gleichzeitig die Lastschaltkupplung K2a bzw. K1, die dem bereits geschalteten Vorwärtsgetriebegang V1 _{L}a-V9_{L}a, V1 _{H}a-V9_{H}a zugeordnet ist, sukzessive geöffnet wird.

Innerhalb einer Schaltgruppe werden die Vorwärtsgetriebegänge V1_{L}a-V9_{L}a, V1_{H}a-V9_{H}a mittels der Doppelkupplungsgetriebevorwärtsgänge V1a-V9a des Doppelkupplungsgetriebes 10a gewechselt. Die Doppelkupplungsgetriebevorwärtsgänge V1a-V9a des Doppelkupplungsgetriebes 10a sind untereinander lastschaltbar, wodurch auch die Vorwärtsgetriebegänge V1_{L}a-V9_{L}a, V1_{H}a-V9_{H}a innerhalb einer Schaltgruppe untereinander lastschaltbar sind.

Eine Differenz der Übersetzungsverhältnisse der Schaltgruppen des Gruppengetriebes 16a ist auf eine Differenz des ersten Doppelkupplungsgetriebevorwärtsgangs V1a und des neunten Doppelkupplungsgetriebevorwärtsgangs V9a des Doppelkupplungsgetriebes 10a angepasst. Der Vorwärtsgetriebegang V9_{L}a, der mittels der unteren Schaltgruppe und dem neunte Doppelkupplungsgetriebevorwärtsgang V9a geschaltet wird, weist ein gleiches Übersetzungsverhältnis auf wie der Vorwärtsgetriebegang V1_{H}a, der mittels der oberen Schaltgruppe und dem ersten Doppelkupplungsgetriebevorwärtsgang V1a geschaltet wird.

Um die Schaltgruppe unter Last zu wechseln, werden der Vorwärtsgetriebegang V9_{L}a und der Vorwärtsgetriebegang V1_{H}a gleichzeitig geschaltet.

Zur gleichzeitigen Schaltung wird ein mittels des neunten Doppelkupplungsgetriebevorwärtsgangs V9a übertragenes Antriebsmoment von der Doppelkupplungsgetriebeausgangswelle 13a des Doppelkupplungsgetriebes 10a über das Sonnenrad 43a auf den Planetenradträger 44a übertragen, der mit der Getriebeausgangswelle 48a verbunden ist. Dadurch ist der Vorwärtsgetriebegang V9_{L}a gebildet. Weiter wird ein mittels des ersten Doppelkupplungsgetriebevorwärtsgangs V1 a übertragenes Antriebsmoment mittels der Schalteinheit S6a von dem Zahnrad 32a der Ausgangszahnradebene Z4a direkt auf die Getriebeausgangswelle 48a übertragen. Die Schalteinheit S6a wird in die erste Schaltstellung geschaltet, in der sie das Doppelkupplungsgetriebeelement 17a mit dem Gruppengetriebeelement 18a verbindet. Dadurch ist das Zahnrad 32a drehfest mit dem Planetenradträger 44a und somit mit der Getriebeausgangswelle 48a verbunden, wodurch der Vorwärtsgetriebegang V1_{H}a gebildet ist.

Bei einem Wechsel der Schaltgruppe ist abhängig von einer Schaltrichtung zunächst einer der beiden Vorwärtsgetriebegänge V9_{L}a, V1_{H}a geschaltet. Für den Wechsel der Schaltgruppe wird anschließend der andere Vorwärtsgetriebegang V9_{L}a, V1_{H}a hinzugeschaltet und ein Kraftfluss über den zuerst geschalteten Vorwärtsgetriebegang V9_{L}a, V1_{H}a wird getrennt, wodurch die Schaltgruppe gewechselt ist.

Der Rückwärtsgetriebegang R1 a wird mittels der unteren Schaltgruppe gebildet. Grundsätzlich wäre aber auch denkbar, alternativ oder zusätzlich einen kleiner übersetzten Rückwärtsgetriebegang mittels der oberen Schaltgruppe zu bilden.

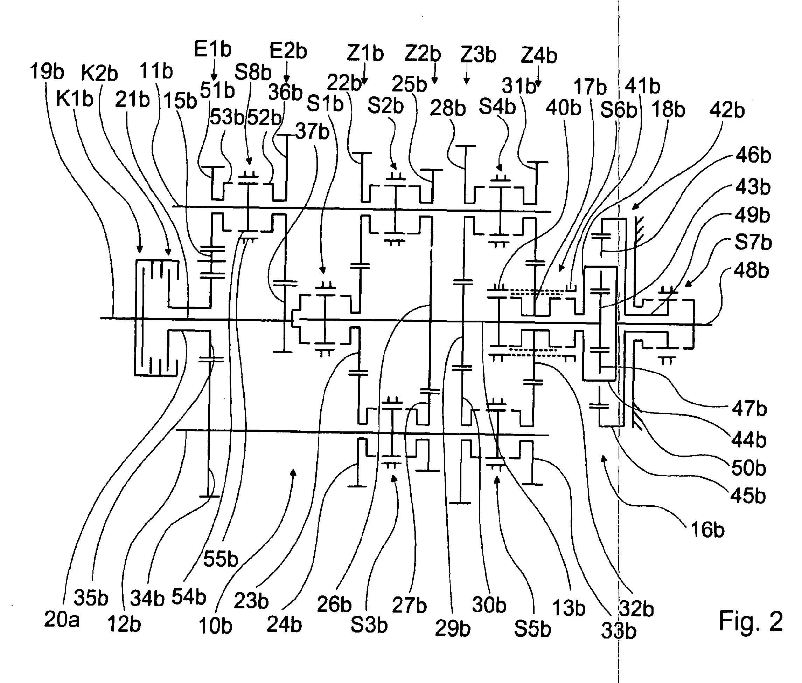

In den Figuren 2 bis 10 sind zwei weitere Ausführungsbeispiele der Erfindung gezeigt. Zur Unterscheidung der Ausführungsbeispiele ist der Buchstabe a in den Bezugszeichen des Ausführungsbeispiels in der Figur 1 durch die Buchstaben b und c in den Bezugszeichen der Ausführungsbeispiele in den Figuren 2 bis 10 ersetzt. Die nachfolgende Beschreibung beschränkt sich im Wesentlichen auf die Unterschiede zu dem Ausführungsbeispiel in der Figur 1, wobei bezüglich gleich bleibender Bauteile, Merkmale und Funktionen auf die Beschreibung des Ausführungsbeispiels in der Figur 1 verwiesen werden kann.

Figur 2 zeigt ein Ausführungsbeispiel einer Getriebeeinheit mit einem Doppelkupplungsgetriebe 10b und einem Gruppengetriebe 16b, das eine geänderte Schaltanordnung zum Schalten eines Rückwärtsgetriebegangs R1b aufweist.

Das Doppelkupplungsgetriebe 10b weist zwei Eingangszahnradebenen E1b, E2b auf, die jeweils eine Doppelkupplungsgetriebeeingangswelle 20b, 21 b und eine Vorgelegewelle 11b, 12b miteinander verbinden. Die Eingangszahnradebenen weisen jeweils zwei Zahnräder 34b, 35b, 36b, 37b auf.

Die Zahnräder 34b, 35b der Eingangszahnradebene E1b sind als Festräder ausgeführt. Das Zahnrad 37b, das auf der Doppelkupplungsgetriebeeingangswelle 21b angeordnet ist, ist ebenfalls als ein Festrad ausgeführt. Das Zahnrad 36b, das auf der Vorgelegewelle 11 b angeordnet ist, ist als ein Losrad ausgeführt.

Zur Bildung des Rückwärtsgetriebegangs R1 b weist das Doppelkupplungsgetriebe 10b ein Umkehrrad 15b auf, das in der eingangsseitig ersten Eingangszahnradebene E1 b des Doppelkupplungsgetriebes 10b angeordnet ist. Weiter weist die Eingangszahnradebene E1 b ein weiteres zusätzliches Zahnrad 51 b zur Bildung des Rückwärtsgetriebegangs R1b auf. Das weitere zusätzliche Zahnrad 51 b ist als ein Losrad ausgeführt und auf der Vorgelegewelle 11 b angeordnet.

Der Rückwärtsgetriebegang R1b wird mittels einer Schalteinheit S8b gebildet. Die Schalteinheit S8b ist in einer Schaltebene zwischen den beiden Eingangszahnradebenen E1b, E2b angeordnet. In einer ersten Schaltstellung verbindet sie das Zahnrad 51 b, das zur Bildung des Rückwärtsgetriebegangs R1 b vorgesehen ist, mit der Vorgelegewelle 11 b. Außerdem verbindet sie in der ersten Schaltstellung das Zahnrad 36b der zweiten Eingangszahnradebene E2b mit der Vorgelegewelle 11 b. In einer zweiten Schaltstellung verbindet sie lediglich das Zahnrad 36b der zweiten Eingangszahnradebene E2b mit der Vorgelegewelle 11 b.

Durch Schalten der Schalteinheit S8b in die erste Schaltstellung können der Rückwärtsgetriebegang R1b und ein erster Doppelkupplungsgetriebevorwärtsgang V1b gleichzeitig gebildet werden. Durch Schalten der Schalteinheit S8b in die zweite Schalstellung kann nur der erste Doppelkupplungsgetriebevorwärtsgang V1 b gebildet werden. Weiter ist zur Schaltung des Rückwärtsgetriebegangs R1b und des ersten Doppelkupplungsgetriebevorwärtsgangs V1 b eine Schalteinheit S6b vorgesehen.

Die Schalteinheit S8b ist als eine Schaltschiebemuffe ausgeführt. In der ersten Schaltstellung ist die Schalteinheit S8b dazu vorgesehen, gleichzeitig mit einer ersten Ankoppeleinheit 52b und einer zweiten Ankoppeleinheit 53b verbunden zu werden. In der zweiten Schalstellung ist die Schalteinheit S8b dazu vorgesehen, lediglich mit der ersten Ankoppeleinheit 52b verbunden zu werden. Die erste Ankoppeleinheit 52b ist drehfest mit dem Zahnrad 36b verbunden. Die zweite Ankoppeleinheit 53b ist drehfest mit dem Zahnrad 51 b verbunden.

Die Schalteinheit S8b weist einen Gleichlaufkörper 54b auf. Der Gleichlaufkörper 54b ist für eine Wellenanbindung vorgesehen. Der Gleichlaufkörper 54b ist drehfest mit der Vorgelegewelle 11 b verbunden. Weiter weist die Schalteinheit S8b eine Schiebemuffe 55b auf, die drehfest aber axial verschiebbar mit dem Gleichlaufkörper 54b verbunden ist. Der Gleichlaufkörper 54b und die Schiebemuffe 55b sind mittels einer Vielzahnverbindung 56b miteinander verbunden.

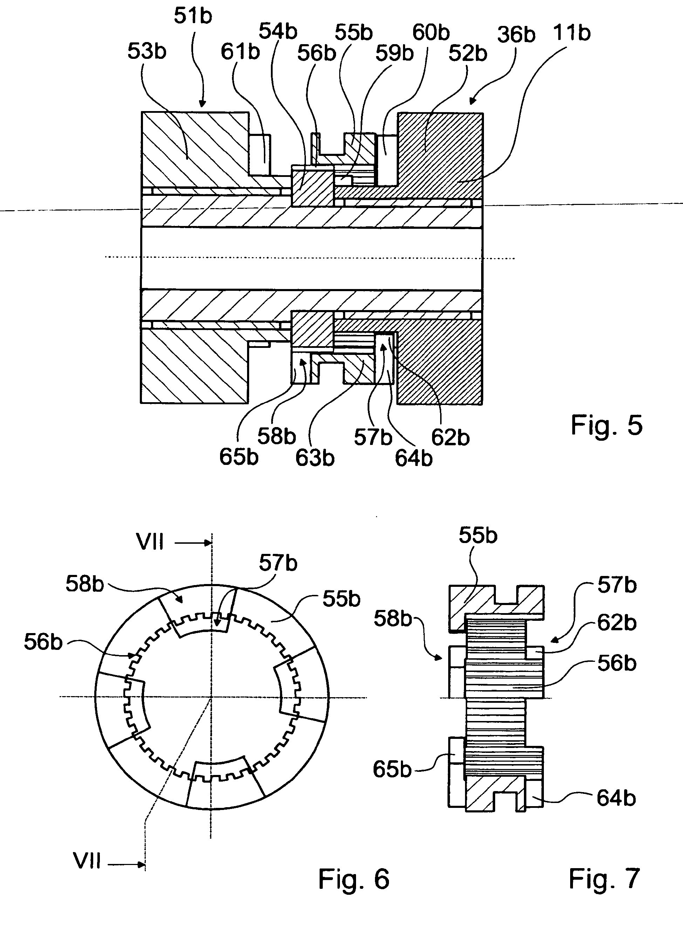

Zur Kopplung mit den Ankoppeleinheiten 52b, 53b weist die Schiebemuffe 55b zwei Schaltklaueneinheiten 57b, 58b auf, die für eine formschlüssige Verbindung mit den Ankoppeleinheiten 52b, 53b vorgesehen sind (vgl. Figur 6 und 7). Die Ankoppeleinheiten 52b, 53b weisen Eingriffseinheiten 59b, 60b, 61 b auf, die korrespondierend zu den Schaltklaueneinheiten 57b, 58b ausgeführt und für einen Eingriff der Schaltklaueneinheiten 57b, 58b vorgesehen sind.

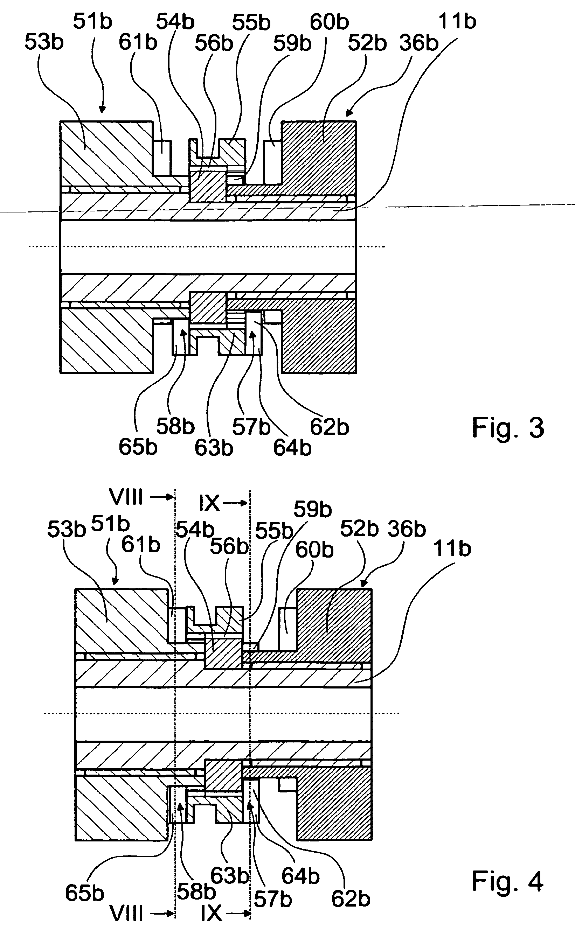

Die erste Ankoppeleinheit 52b weist die zwei Eingriffseinheiten 59b, 60b auf. Die erste Eingriffseinheit 59b ist der ersten Schaltstellung zugeordnet. In der ersten Schaltstellung greift die korrespondierende Schaltklaueneinheit 57b der Schiebemuffe 55b in die erste Eingriffseinheit 59b der ersten Ankoppeleinheit 52b ein (vgl. Figur 4). Die zweite Eingriffseinheit 60b ist der zweiten Schaltstellung zugeordnet. In der zweiten Schaltstellung greift die korrespondierende Schaltklaueneinheit 57b der Schiebemuffe 55b in die zweite Eingriffseinheit 60b der ersten Ankoppeleinheit 52b ein (vgl. Figur 5).

Die Eingriffseinheiten 59b, 60b der ersten Ankoppeleinheit 52b sind axial beabstandet ausgeführt. Ein Abstand der Eingriffseinheiten 59b, 60b ist größer als eine axiale Breite der Schaltklaueneinheit 57b. In einer Neutralstellung der Schalteinheit S8b ist die Schaltklaueneinheit 57b der Schiebemuffe 55b axial zwischen den beiden Eingriffseinheiten 59b, 60b der ersten Ankoppeleinheit 52b angeordnet (vgl. Figur 3). Dadurch befinden sich die Schaltklaueneinheit 57b und die Eingriffseinheiten 59b, 60b außerhalb eines Eingriffs, wodurch der Gleichlaufkörper 54b und die erste Ankoppeleinheit 52b in der Neutralstellung voneinander entkoppelt sind.

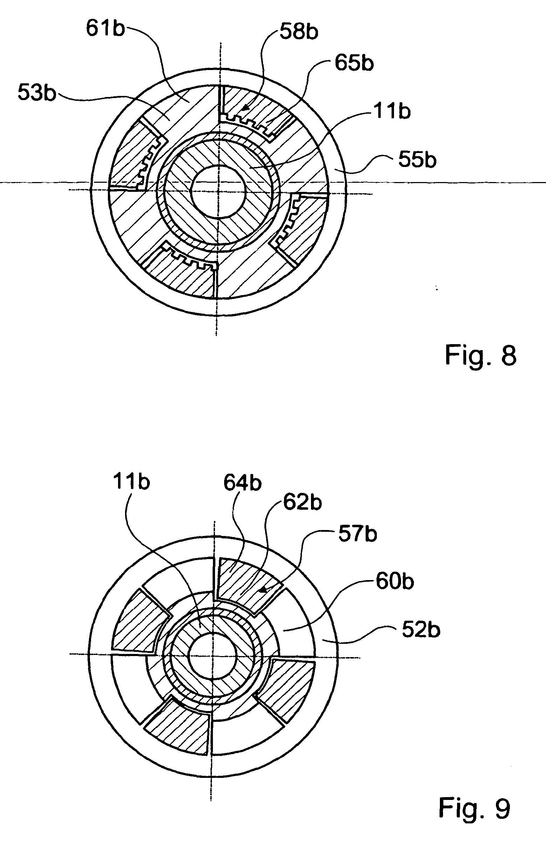

Ein Teil der Schaltklaueneinheit 57b, die zum Eingriff in die Eingriffseinheit 59b vorgesehen ist, ist zumindest teilweise als eine Radialklaueneinheit 62b ausgebildet (vgl. Figur 9). Ein Trägerelement 63b der Radialklaueneinheit 62b ist radial außerhalb der Vielzahnverbindung 56b angeordnet. Es weist auf seiner Innenseite einen Teil der Vielzahnverbindung 56b auf. Das Trägerelement 63b kann zumindest teilweise in axialer Richtung über die Vielzahnverbindung 56b hinweg verschoben werden.

Durch die Ausführung des Trägerelements 63b ist insbesondere die Eingriffseinheit 59b, die für die erste Schaltstellung vorgesehen ist, radial innerhalb des Trägerelements 63b angeordnet. Ist die Schiebemuffe 55b in die Neutralstellung oder in die zweite Schaltstellung verschoben, ist die Eingriffseinheit 59b für die erste Schaltstellung radial und axial innerhalb des Trägerelements 63b angeordnet, wodurch die Schaltklaueneinheit 57b und die Eingriffseinheit 59b außerhalb eines Eingriffs sind. In der ersten Schaltstellung steht die Radialklaueneinheit 62b in Eingriff mit der Eingriffseinheit 59b.

Die Eingriffseinheit 60b ist teilweise analog zu der Eingriffseinheit 59b ausgebildet. Sie ist ebenfalls für einen Eingriff der Radialklaueneinheit 62b vorgesehen. Für die zweite Schaltstellung weist die Schaltklaueneinheit 57b eine zusätzliche Axialklaueneinheit 64b auf, die radial in Höhe des Trägerelements 63b bzw. außerhalb der Vielzahnverbindung 56b angeordnet ist. Die Eingriffseinheit 60b ist für einen Eingriff der Radialklaueneinheit 62b und der Axialklaueneinheit 64b ausgebildet.

Die Ankoppeleinheit 53b weist lediglich die Eingriffseinheit 61b auf (vgl. Figur 9). Die Schaltklaueneinheit 58b ist als eine Axialklaueneinheit 65b ausgebildet. Die Schaltklaueneinheit weist Axialklauen auf, die radial außerhalb der Vielzahnverbindung 56b der Schiebemuffe 55b angeordnet sind. Die Eingriffseinheit 61b ist korrespondierend zu der Axialklaueneinheit 65b ausgebildet.

Die Eingriffseinheit 61 b ist der ersten Schaltstellung der Schalteinheit S8b zugeordnet. In der ersten Schaltstellung greift die korrespondierende Schaltklaueneinheit 58b der Schiebemuffe 55b in die Eingriffseinheit 61 b der zweiten Ankoppeleinheit 53b ein (vgl. Figur 4). In der Neutralstellung und in der zweiten Schaltstellung sind der Gleichlaufkörper 54b und die zwei Ankoppeleinheiten 52b, 53b voneinander entkoppelt (vgl. Figuren 3 und 5). In der Neutralstellung und in der zweiten Schaltstellung ist die Schaltklaueneinheit 58b axial überschneidend mit der Vielzahnverbindung 56b angeordnet, wodurch sie in der Neutralstellung und in der zweiten Schaltstellung außerhalb eines Eingriffs in die Eingriffseinheit 61 b steht.

Eine Ausgestaltung der Schalteinheit S8b als eine Schalteinheit, die in einer ersten Schaltstellung zur Kopplung mit einer ersten und einer zweiten Ankoppeleinheit und in einer zweiten Schaltstellung zur Kopplung mit der ersten Ankoppeleinheit vorgesehen ist, ist grundsätzlich unabhängig von der Getriebeeinheit. Eine derartige Schalteinheit kann prinzipiell auch für Anwendungen, insbesondere für andere Getriebeeinheiten, vorgesehen sein.

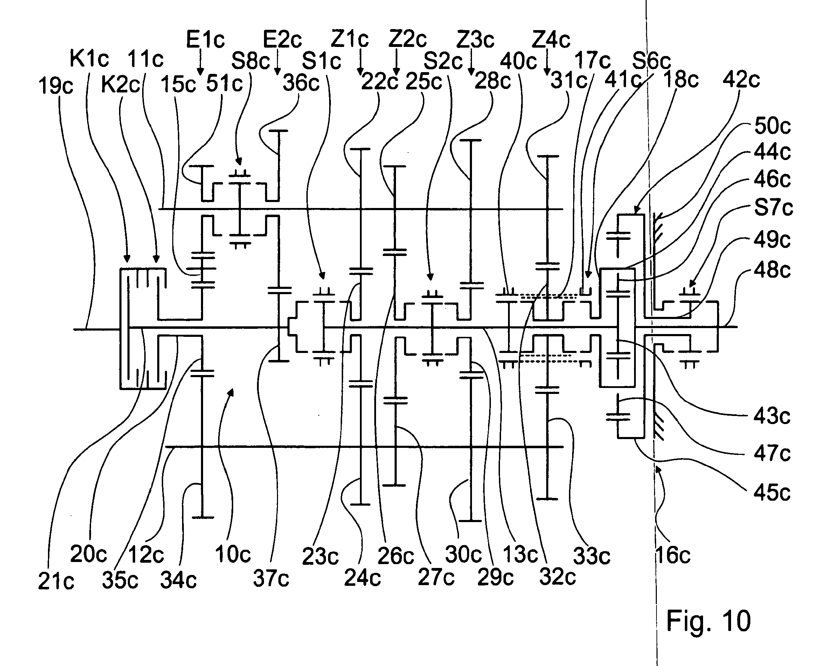

Figur 10 zeigt eine weitere Ausgestaltung einer Getriebeeinheit mit einem Doppelkupplungsgetriebe 10c und einem Gruppengetriebe 16c. Im Unterschied zu dem ersten Ausführungsbeispiel weist das Doppelkupplungsgetriebe 10c eine geänderte Ausführung von Zahnrädern 22c-37c zur Bildung von Doppelkupplungsgetriebevorwärtsgängen V1 c-V9c als Losräder und als Festräder auf. Weiter ist eine Anordnung von Schalteinheiten S1c, S2c, S6c, S7c auf die geänderte Ausführung der Zahnräder 22c-37c angepasst.

Ein mittels der Doppelkupplungsgetriebe 10c bildbarer Rückwärtsgetriebegang R1c wird analog zu dem zweiten Ausführungsbeispiel gebildet. Für eine Beschreibung von zwei Eingangszahnradebenen E1c, E2c sowie einer zwischen den Eingangszahnradebenen E1c, E2c angeordneten Schalteinheit S8c sei auf die entsprechende Beschreibung des zweiten Ausführungsbeispiels verwiesen.

Die Zahnräder 22c, 24c, 25c, 27c, 28c, 30c, 31c, 33c, die in vier Ausgangszahnradebenen Z1c, Z2c, Z3c, Z4c auf zwei Vorgelegewellen 11c, 12c angeordnet sind, sind in Bezug auf ihren Durchmesser und ihr Zuordnung zu Doppelkupplungsgetriebevorwärtsgängen V1c-V9c analog zu dem ersten Ausführungsbeispiel ausgeführt. Im Unterschied zu dem ersten Ausführungsbeispiel sind die Zahnräder 22c, 24c, 25c, 27c, 28c, 30c, 31c, 33c als Festräder ausgeführt und drehfest mit den Vorgelegewellen 11 c, 12c verbunden.

Die auf einer Doppelkupplungsgetriebeausgangswelle 13c angeordneten Zahnräder 23c, 26c, 29c, 32c, die mit den auf den Vorgelegewellen angeordneten Zahnrädern 22c, 24c, 25c, 27c, 28c, 30c, 31 c, 33c kämmen, sind als Losräder ausgeführt. Auf der Doppelkupplungsgetriebeausgangswelle 13c sind die Schalteinheiten S1c, S2c, S6c angeordnet, mittels denen die Zahnräder 23c, 26c, 29c, 32c mit der Doppelkupplungsgetriebeausgangswelle 13c verbunden werden können.

Die Schalteinheit S1c verbindet in einer zweiten Schaltstellung das Zahnrad 23c der Ausgangszahnradebene Z1 c mit der Doppelkupplungsgetriebeausgangswelle 13c. In der zweiten Schaltstellung ist die Schalteinheit S1c zur Bildung des fünften und des sechsten Doppelkupplungsgetriebevorwärtsgangs V5c, V6c vorgesehen. In einer ersten Schaltstellung verbindet die Schalteinheit S1c eine Doppelkupplungsgetriebeeingangswelle 21c mit der Doppelkupplungsgetriebeausgangswelle 13c. In der ersten Schaltstellung ist die Schalteinheit S1c zur Bildung des neunten Doppelkupplungsgetriebevorwärtsgangs V9c, der als eine Direktgang ausgebildet ist, vorgesehen.

Die Schalteinheit S2c verbindet in einer ersten Schaltstellung das Zahnrad 26c mit der Doppelkupplungsgetriebeausgangswelle 13c. In der ersten Schaltstellung ist die Schalteinheit S2c zur Bildung des dritten und des vierten Doppelkupplungsgetriebevorwärtsgangs V3c, V4c vorgesehen. In einer zweiten Schaltstellung verbindet die Schalteinheit S1c das Zahnrad 29c mit der Doppelkuplungsgetriebeausgangswelle 13c. In der zweiten Schaltstellung ist sie zur Bildung eines siebten und eines achten Doppelkupplungsgetriebevorwärtsgangs V8c, V9c vorgesehen.

Die Schalteinheit S6c verbindet in einer ersten Schaltstellung das Zahnrad 32c mit der Doppelkupplungsgetriebeausgangswelle 13c. In der ersten Schaltstellung ist die Schalteinheit S6c zur Bildung des ersten und des zweiten Doppelkupplungsgetriebevorwärtsgangs V1c, V2c vorgesehen. In einer zweiten Schaltstellung verbindet die Schalteinheit S6c ein Doppelkupplungsgetriebeelement 17c mit einem Gruppengetriebeelement 18c. In der zweiten Schaltstellung ist sie zur Anbindung des Doppelkupplungsgetriebes 10c an das Gruppengetriebe 16c vorgesehen.

Durch die geänderte Anordnung der Schalteinheiten S1c, S2c, S6c, S7c, S8c sind die Doppelkupplungsgetriebevorwärtsgänge V1c-V9c teilweise untereinander lastschaltbar. Lastschaltbar sind ein Gangwechseln vom ersten in den zweiten Doppelkupplungsgetriebevorwärtsgang V1c, V2c, vom dritten in den vierten Doppelkupplungsgetriebevorwärtsgang V3c, V4c, vom fünften in den sechsten Doppelkupplungsgetriebevorwärtsgang V5c, V6c, vom siebten in den achten Doppelkupplungsgetriebevorwärtsgang V7c, V8c und vom achten in den neunen Doppelkupplungsgetriebevorwärtsgang V8c, V9c.

Mittels der lastschaltbaren Doppelkupplungsvorwärtsgetriebegänge V1c-V9c sind auch entsprechende Wechsel von Vorwärtsgetriebegängen V1_{L}c-V9_{L}c, V1_{H}c-V9_{H}c lastschaltbar. Mittels der Schalteinheit S6c ist auch eine Schaltgruppe unter Last schaltbar. Für eine entsprechende Beschreibung sei an dieser Stelle auf das erste Ausführungsbeispiel verwiesen.

## Patentansprüche

1. Getriebeeinheit, insbesondere eine Kraftfahrzeuggetriebeeinheit, die ein Doppelkupplungsgetriebe (10a; 10b; 10c) und ein Gruppengetriebe (16a; 16b; 16c), das dazu vorgesehen ist, eine untere Schaltgruppe und eine obere Schaltgruppe bereitzustellen, aufweist,
wobei das Doppelkupplungsgetriebe (10a; 10b; 10c) zwei Lastschaltkupplungen (K1a, K2a; K1b, K2b; K1 c, K2c), zumindest zwei zueinander parallel versetzt angeordnete Vorgelegewellen (11a, 12a; 11 b, 12b; 11 c, 12c), eine Doppelkupplungsgetriebeausgangswelle (13a; 13b; 13c) und zumindest zwei Ausgangszahnradebenen (Z1a, Z2a, Z3a, Z4a; Z1b, Z2b, Z3b, Z4b; Z1c, Z2c, Z3c, Z4c), die dazu vorgesehen sind, die Vorgelegewellen (11a, 12a; 11b, 12b; 11c, 12c) und die Doppelkupplungsgetriebeausgangswelle (13a; 13b; 13c) zu verbinden, aufweist,
wobei eine erste Gruppe von Doppelkupplungsgetriebevorwärtsgängen (V1a, V3a, V5a, V7a; V1 b, V3b, V5b, V7b; V1 c, V3c, V5c, V7c) mittels der ersten Vorgelegewelle (11a, 11 b, 11 c) und eine zweite Gruppe von Doppelkupplungsgetriebevorwärtsgängen (V2a, V4a, V6a, V8a; V2b, V4b, V6b, V8b; V2c, V4c, V6c, V8c) mittels der zweiten Vorgelegewelle (12a; 12b; 12c) gebildet werden,
wobei jede der Lastschaltkupplungen (K1a, K2a; K1b, K2b; K1c, K2c) mit einer Doppelkupplungsgetriebeeingangswelle (20a, 21 a; 20b, 21 b; 20c, 21 c) verbunden ist, wobei eine Doppelkupplungsgetriebeeingangswelle (21a, 21b, 21c) als Vollwelle ausgeführt ist und die andere als Hohlwelle ausgeführte Doppelkupplungsgetriebeeingangswelle (20a, 20b, 20c) durchsetzt,
**dadurch gekennzeichnet, dass**
das Doppelkupplungsgetriebe (10a; 10b; 10c) genau zwei Eingangszahnradebenen (E1a, E2a; E1b, E2b; E1c, E2c) mit unterschiedlichen Übersetzungsverhältnissen aufweist,
wobei jeweils eine der Eingangszahnradebenen (E1a, E2a; E1b, E2b; E1c, E2c) eine der Doppelkupplungsgetriebeeingangswellen (20a, 21 a; 20b, 21 b; 20c, 21 c) und eine der Vorgelegewellen (11 a, 12a; 11b, 12b; 11 c, 12c) miteinander verbindet, und die Vorgelegewellen (11 a, 12a; 11 b, 12b; 11 c, 12c) in sämtlichen Ausgangszahnradebenen (Z1a, Z2a, Z3a, Z4a; Z1b, Z2b, Z3b, Z4b; Z1c, Z2c, Z3c, Z4c) des Doppelkupplungsgetriebes (10a; 10b; 10c) symmetrisch ausgebildet sind.

2. Getriebeeinheit nach Anspruch 1,
**dadurch gekennzeichnet, dass**
wenigstens eine der Ausgangszahnradebenen (Z1a, Z2a, Z3a, Z4a; Z1 b, Z2b, Z3b, Z4b; Z1 c, Z2c, Z3c, Z4c) dazu vorgesehen ist, zumindest zwei benachbarte Doppelkupplungsgetriebevorwärtsgänge (V1 a-V8a; V1 b-V8b; V1 c-V8c) zu bilden.

3. Getriebeeinheit nach einem der vorhergehenden Ansprüche,
**dadurch gekennzeichnet, dass**
die Vorgelegewellen (11 a, 12a; 11 b, 12b; 11 c, 12c) äquidistant zu der Doppelkupplungsgetriebeausgangswelle (13a; 13b; 13c) angeordnet sind.

4. Getriebeeinheit nach einem der vorhergehenden Ansprüche,
**dadurch gekennzeichnet, dass**
das Doppelkupplungsgetriebe (10a; 10b) zumindest zwei Schalteinheiten (S2a, S3a, S4a, S5a; S2b, S3b, S4b, S5b) aufweist, die symmetrisch auf den Vorgelegewellen (11a, 12a; 11b, 12b) angeordnet sind.

5. Getriebeeinheit nach einem der vorhergehenden Ansprüche,
**gekennzeichnet durch**
eine Zusatzwelle (14a), die zur Bildung eines Rückwärtsgetriebegangs (R1a) und eines Nebenabtriebs vorgesehen ist.

6. Getriebeeinheit nach einem der vorhergehenden Ansprüche,
**gekennzeichnet durch**
ein in einer Eingangszahnradebene (E1b; E1c) angeordnetes Umkehrrad (15b; 15c), das für eine Drehrichtungsumkehr zur Bildung eines Rückwärtsgetriebegangs (R1b; R1 c) vorgesehen ist.

7. Getriebeeinheit nach Anspruch 6,
**gekennzeichnet durch**
eine Schalteinheit (S8b; S8c), die in einer ersten Schaltstellung zur Kopplung mit einer ersten und einer zweiten Ankoppeleinheit (52b, 53b; 52c, 53c) und in einer zweiten Schaltstellung zur Kopplung mit der ersten Ankoppeleinheit (52b: 52c) vorgesehen ist.

8. Getriebeeinheit nach Anspruch 7,
**dadurch gekennzeichnet, dass**
die Schalteinheit (S8b; S8c) zumindest eine Schaltklaueneinheit (57b; 57c) aufweist, die dazu vorgesehen ist, in zumindest zwei axial beabstandete Eingriffseinheiten (59b, 60b; 59c, 60c) einer Ankoppeleinheit (52b; 52c) einzugreifen.

9. Getriebeeinheit nach einem der vorhergehenden Ansprüche,
**gekennzeichnet durch**
eine Schalteinheit (S6a; S6b; S6c), die für einen Wechsel zwischen den Schaltgruppen unter Last vorgesehen ist.

10. Getriebeeinheit nach Anspruch 9,
**gekennzeichnet durch**
ein Doppelkupplungsgetriebeelement (17a; 17b; 17c) und ein Gruppengetriebeelement (18a; 18b; 18c), die mittels der Schalteinheit (S6a; S6b; S6c) miteinander verbindbar sind.

## Claims

1. Gear unit, in particular motor vehicle gear unit, comprising a twin-clutch gearbox (10a; 10b; 10c) and a range-change gearbox (16a; 16b; 16c) provided for making available a lower gear range and an upper gear range,
wherein the twin-clutch gearbox (10a; 10b; 10c) comprises two powershift clutches (K1a, K2a; K1 b, K2b; K1 c, K2c), at least two layshafts (11 a, 12a; 11 b, 12b; 11 c, 12c) arranged parallel to and offset against one another, a twin-clutch gearbox output shaft (13a; 13b; 13c) and at least two output gear planes (Z1a, Z2a, Z3a, Z4a; Z1b, Z2b, Z3b, Z4b; Z1 c, Z2c, Z3c, Z4c) provided for connecting the layshafts (11 a, 12a; 11 b, 12b; 11 c, 12c) and the twin-clutch gearbox output shaft (13a; 13b; 13c),
wherein a first group of twin-clutch gearbox forward gears (V1a, V3a, V5a, V7a; V1 b, V3b, V5b, V7b; V1 c, V3c, V5c, V7c) is formed by means of the first layshaft (11 a, 11 b, 11c) and a second group of twin-clutch gearbox forward gears (V2a, V4a, V6a, V8a; V2b, V4b, V6b, V8b; V2c, V4c, V6c, V8c) is formed by means of the second layshaft (12a; 12b; 12c),
wherein each of the powershift clutches (K1 a, K2a; K1 b, K2b; K1 c, K2c) is connected to a twin-clutch gearbox input shaft (20a, 21 a; 20b, 21 b; 20c, 21 c), one twin-clutch gearbox input shaft (21 a, 21 b, 21 c) being designed as a solid shaft and passing through the other twin-clutch gearbox input shaft (20a, 20b, 20c), which is designed as a hollow shaft,
**characterised in that**
the twin-clutch gearbox (10a; 10b; 10c) has exactly two input gear planes (E1a, E2a; E1b, E2b; E1c, E2c) with different transmission ratios,
wherein one of the input gear planes (E1 a, E2a; E1 b, E2b; E1 c, E2c) in each case connects one of the twin-clutch gearbox input shafts (20a, 21 a; 20b, 21 b; 20c, 21 c) to one of the layshafts (11 a, 12a; 11 b, 12b; 11 c, 12c) and the layshafts (11 a, 12a; 11 b, 12b; 11 c, 12c) are symmetric in all output gear planes (Z1 a, Z2a, Z3a, Z4a; Z1 b, Z2b, Z3b, Z4b; Z1 c, Z2c, Z3c, Z4c) of the twin-clutch gearbox (10a; 10b; 10c).

2. Gear unit according to claim 1,
**characterised in that**
at least one of the output gear planes (Z1 a, Z2a, Z3a, Z4a; Z1 b, Z2b, Z3b, Z4b; Z1 c, Z2c, Z3c, Z4c) is provided to form at least two adjacent twin-clutch gearbox forward gears (V1a-V8a; V1b-V8b; V1 c-V8c).

3. Gear unit according to any of the preceding claims,
**characterised in that**
the layshafts (11 a, 12a; 11 b, 12b; 11 c, 12c) are arranged equidistant from the twin-clutch gearbox output shaft (13a; 13b; 13c).

4. Gear unit according to any of the preceding claims,
**characterised in that**
the twin-clutch gearbox (10a; 10b) comprises at least two shifting units (S2a, S3a, S4a, S5a; S2b, S3b, S4b, S5b), which are arranged symmetrically on the layshafts (11 a, 12a; 11 b, 12b).

5. Gear unit according to any of the preceding claims,
**characterised by**
an auxiliary shaft (14a) provided for forming a reverse gear (R1a) and a power take-off.

6. Gear unit according to any of the preceding claims,
**characterised by**
reversing gear (15b; 15c) located in an input gear plane (E1 b; E1 c), which is provided for reversing the direction of rotation for the formation of a reverse gear (R1 b; R1 c).

7. Gear unit according to claim 6,
**characterised by**
a shifting unit (S8b; S8c), which is provided for coupling to a first and second coupling unit (52b, 53b; 52c. 53c) in a first shifting position and for coupling to the first coupling unit (52b; 52c) in a second shifting position.

8. Gear unit according to claim 7,
**characterised in that**
the shifting unit (S8b; S8c) comprises at least one selector fork unit (57b; 57c), which is provided to engage at least two axially spaced engagement units (59b, 60b; 59c, 60c) of a coupling unit (52b; 52c).

9. Gear unit according to any of the preceding claims,
**characterised by**
a shifting unit (S6a; S6b; S6c), which is provided to shift between the gear ranges under load.

10. Gear unit according to claim 9,
**characterised by**
a twin-clutch gearbox element (17a; 17b; 17c) and a range-change gearbox element (18a; 18b; 18c), which can be connected to one another by means of the shifting unit (S6a; S6b; S6c).

## Revendications

1. Unité de transmission, en particulier une unité de transmission pour véhicule à moteur, qui présente une boîte de vitesses à double embrayage (10a, 10b, 10c) et une boîte de vitesses auxiliaire (16a, 16b; 16c) prévue fournir un groupe de changement de vitesse inférieur et un groupe de changement de vitesse supérieur, la boîte de vitesses à double embrayage (10a, 10b, 10c) présentant deux embrayages couplables sous charge (K1 a, K2a, K1 b, K2b, K1 c, K2c), au moins deux arbres intermédiaires (11 a, 12a, 11 b, 12b, 11 c, 12c) parallèles entre eux, un arbre de sortie de boîte de vitesses à double embrayage (13a; 13b; 13c) et au moins deux plans de pignons de sortie (Z1 a, Z2a, Z3a, Z4a, Z1 b, Z2b, Z3b, Z4b, Z1 c, Z2c, Z3c, Z4c) prévus pour relier les arbres intermédiaires (11 a, 12a, 11 b, 12b, 11 c, 12c) et les arbres de sortie de la boîte de vitesses à double embrayage (13a; 13b; 13c), un premier groupe de marches avant de la boîte de vitesses à double embrayage (V1a, V3a, V5a, V7a, V1 b, V3b, V5b, V7b, V1 c, V3c, V5c, V7c) se formant au moyen du premier arbre intermédiaire (11 a, 11 b, 11 c) et un second groupe de marches avant de boîte de vitesses à double embrayage (V2a, V4a, V6a, V8a, V2b, V4b, V6b, V8b, V2c, V4c, V6c, V8c) au moyen du second arbre intermédiaire (12a; 12b; 12c), chaque embrayage couplable sous charge (K1 a, K2a, K1 b, K2b, K1 c, K2c) étant relié à un arbre d'entrée de boîte de vitesses à double embrayage (20a, 21 a, 20b, 21 b, 20c, 21 c), un arbre de sortie de boîte de vitesses à double embrayage (21a, 21b, 21c) est conçu comme un arbre plein et traverse l'autre arbre d'entrée de boîte de vitesses à double embrayage (20a, 20b, 20c) conçu comme un arbre creux, **caractérisé en ce que** la boîte de vitesses à double embrayage (10a; 10b; 10c) présente exactement deux plans de pignons d'entrée (E1a, E2a, E1 b, E2b, E1 c, E2c) avec différents rapports de démultiplication, chaque plan de pignon d'entrée (E1a, E2a, E1b, E2b, E1c, E2c) reliant entre eux l'un des arbres d'entrée de boîte de vitesses (20a, 21a, 20b, 21b, 20c, 21c) à l'un des arbres intermédiaires (11 a, 12a; 11 b, 12b; 11c, 12c) et les arbres intermédiaires (11 a, 12a, 11 b, 12b, 11 c, 12c) dans tous les plans de pignons de sortie (Z1a; Z2a, Z3a, Z4a, Z1b, Z2b, Z3b, Z4b, Z1c, Z2c, Z3c, Z4c) de la boîte de vitesses à double embrayage (10a, 10b, 10c) sont conçus de manière symétrique.

2. Unité de transmission selon la revendication 1, **caractérisé en ce qu'**un des plans de pignons de sortie (Z1a, Z2a, Z3a, Z4a, Z1 b, Z2b, Z3b, Z4b, Z1 c, Z2c, Z3c, Z4c) est prévu pour former au moins deux marches avant adjacentes de boîte de vitesses à double embrayage (V1 a-V8a, V1 b-V8b, V1 c-V8c).

3. Unité de transmission selon l'une quelconque des revendications précédentes, **caractérisée en ce que** les arbres intermédiaires (11 a, 12a, 11 b, 12b, 11 c, 12c) sont équidistants de l'arbre de sortie de boîte de vitesses à double embrayage (13a, 13b, 13c).

4. Unité de transmission selon l'une quelconque des revendications précédentes, **caractérisée en ce que** la boîte de vitesses à double embrayage (10a, 10b) présente au moins deux unités de changement de vitesse (S2a, S3a, S4a, S5a; S2b, S3b, S4b, S5b) qui sont montées de manière symétrique sur les arbres intermédiaires (11 a, 12a, 11 b, 12b).

5. Unité de transmission selon l'une quelconque des revendications précédentes, **caractérisé en ce qu'**un arbre supplémentaire (14a) est prévu pour former une marche arrière (R1a) et une prise de force.

6. Unité de transmission selon l'une quelconque des revendications précédentes, **caractérisé en ce qu'**un roue d'inversion (15b, 15c) disposée dans un plan de pignons d'entrée (E1b, E1 c) est destiné à former une marche arrière (R1b, R1 c) pour une inversion du sens de rotation.

7. Unité de transmission selon la revendication 6, **caractérisé par** une unité de changement de vitesse (S8b; S8c) qui, dans une première position de changement de vitesse, est destinée à s'accoupler à une première et à une seconde unité d'accouplement (52b, 53b, 52c, 53c) et dans une seconde position de changement de vitesse à la première unité d'accouplement (52b; 52c).

8. Unité de transmission selon la revendication 7, **caractérisé en ce que** l'unité de changement de vitesse (S8b; S8c) présente au moins une unité d'accouplement par crabotage (57b; 57c) qui est destinée à s'engrener dans au moins deux unités d'engrènement (59b, 60b, 59c, 60c) d'une unité d'accouplement (52b, 52c), lesquelles sont disposées axialement.

9. Unité de transmission selon l'une quelconque des revendications précédentes, **caractérisé par** une unité de changement de vitesse (S6a, S6b, S6c) qui est destinée à effectuer le changement entre les groupes de changement de vitesse sous charge.

10. Unité de transmission selon la revendication 9, **caractérisée par** un élément de transmission de boîte de vitesses à double embrayage (17a, 17b, 17c) et un élément de boîte de vitesses auxiliaire (18a, 18b, 18c) qui peuvent être reliés entre elles par l'unité de changement de vitesse (S6a, S6b, S6c).
